# EUROPEAN PATENT APPLICATION

(11) **EP 4 556 984 A1**
(43) Date of publication of application: **21.05.2025**
(21) Application number: 24207118.1
(22) Date of filing: 17.10.2024
(51) Int. Cl.: G02B 13/14, G01S 7/481, G01S 17/08, G02B 7/02, G01S 17/89

(54) **INFRARED THERMAL IMAGING DEVICE AND BUILT-IN RANGE-FINDING INFRARED CAMERA LENS THEREOF**

(30) Priority: 09.11.2023 CN 202311486954
(71) Applicant: Infiray Technologies Co., Ltd., Hefei, Anhui 230001 (CN)
(72) Inventor: LI, Run, Hefei, Anhui, 230001 (CN); ZHANG, Zhe, Hefei, Anhui, 230001 (CN); SUN, Tongbo, Hefei, Anhui, 230001 (CN)
(74) Representative: Biallo, Dario

(57) **Abstract**

A built-in range-finding infrared camera lens is provided, including a lens barrel, an infrared lens, a laser transceiver and a laser lens. An outer edge of the infrared lens has a notch. The infrared lens and the laser lens are both fixedly mounted at a front end of the lens barrel, and the laser lens is embedded in the notch. The laser transceiver is fixedly mounted at a rear end of the lens barrel. A laser ranging optical axis corresponding to the laser lens is parallel to an infrared optical axis corresponding to the infrared lens. In this way, the infrared lens, the laser lens and the laser transceiver are all fixedly mounted in the lens barrel, and are connected into a whole through the lens barrel without the needs of additional adapter components or other mounting procedures, there is no cumulative mounting error due to of cooperation of multiple structures, which ensures that the optical axis of the laser light for ranging and the optical axis of the infrared lens are highly parallel to each other without an extra increase in volume size. An infrared thermal imaging device is further provided, which also has the above beneficial effects.

## Description

### FIELD

The present application relates to the technical field of infrared technology, and in particular to a built-in range-finding infrared camera lens. The present application further relates to an infrared thermal imaging device.

### BACKGROUND

As image technology develops, various image devices have been widely used.

There are many types of image devices, such as cameras, monitors, scanners, night vision devices, infrared imaging devices and the like. The image device obtains image data through imaging module, while the infrared imaging device (also called the thermal imaging device) mainly images infrared signals through the infrared imaging module.

The conventional infrared thermal imaging device mainly consists of an infrared lens and an infrared detector. The principle of infrared imaging technology is to collect the infrared signal reflected or radiated by an object through the infrared lens, then convert the infrared signal into an electrical signal by photoelectric conversion through a focal plane array of the infrared detector, and finally output a visible image based on the electrical signal.

At present, the infrared thermal imaging device is generally equipped with a laser rangefinder to measure a distance of the object to be imaged through the principle of laser distance measurement when the infrared imaging is carried out, to determine a position of the object.

In the conventional technology, the laser rangefinder is externally mounted on the infrared thermal imaging device, where an adapter bracket, positioner, or other adapter components is needed for adaptive installation. That is, the laser rangefinder is used as an independent accessory. However, the laser rangefinder with this design not only takes up space, which leads to an extra increase in size and volume of the infrared thermal imaging device and is not conducive to miniaturization, but also becomes complicated in structure and troublesome in disassembly and assembly operation. More importantly, in order to ensure a high ranging accuracy of the laser rangefinder, an optical axis of emitted laser light for ranging should be as parallel as possible to an optical axis of the infrared lens. However, as for the externally mounted laser rangefinder in the conventional technology, multiple adapter components and several mounting procedures are needed for adapting and mounting the laser rangefinder to the infrared thermal imaging device, leading to a large cumulative mounting error in the mounting process, which in turn results in a situation that the optical axis of the laser light for ranging deviates from the optical axis of the infrared lens after the adapting and mounting, so it is difficult to ensure a high level of parallelism, and thus the laser rangefinder needs to be disassembled and assembled repeatedly to adjust the mounting position, which is troublesome.

Therefore, a technical problem to be addressed by those skilled in this art is how to easily ensure the high level of the parallelism between the optical axis of the laser light for ranging and the optical axis of the infrared lens without an extra increase in volume size of the infrared thermal imaging device.

### SUMMARY

An object of the present application is to provide a built-in range-finding infrared camera lens, which can easily ensure a high level of parallelism between an optical axis of laser light for ranging and an optical axis of an infrared lens without an extra increase in volume size. Another object of the present application is to provide an infrared thermal imaging device.

In order to solve the above technical problem, a built-in range-finding infrared camera lens is provided according to the present application, including a lens barrel, an infrared lens, a laser transceiver and a laser lens; where
an outer edge of the infrared lens is provided with a notch;
the infrared lens and the laser lens are both fixedly mounted at a front end of the lens barrel, and the laser lens is embedded in the notch;
the laser transceiver is fixedly mounted at a rear end of the lens barrel; and
a laser ranging optical axis of the laser lens is parallel to an infrared optical axis of the infrared lens.

In an embodiment, the built-in range-finding infrared camera lens further includes a partition arranged in the lens barrel, the partition divides an internal space of the lens barrel into two portions separated from each other, one of the two portions has a shape matching a shape of the notch and is configured for mounting the laser lens, and the other of the two portions has a shape matching a shape of the infrared lens and is configured for mounting the infrared lens.

In an embodiment, a rear end of the partition is provided with a first mounting groove for mounting the laser transceiver, and a front end of the partition is provided with a second mounting groove for mounting the laser lens; where mounting surfaces of the first mounting groove and the second mounting groove are both parallel to a cross section of the lens barrel, and a laser through hole for laser light to pass through is provided between the first mounting groove and the second mounting groove for communication.

In an embodiment, the laser lens includes an exit lens for transmitting exited laser light and an incident lens for transmitting incident laser light respectively, and an outer edge of the exit lens and an outer edge of the incident lens abut against each other; the number of the laser through hole is two, and the two laser through holes are configured for the exited laser light and the incident laser light to pass through, respectively.

In an embodiment, at least one of the outer edge of the exit lens and the outer edge of the incident lens has a trimmed edge for reducing an area, and both the outer edge of the exit lens and the outer edge of the incident lens abut against the partition and the inner wall of the lens barrel at the same time.

In an embodiment, the partition is of an arc shape arching towards a central axis of the lens barrel, an inner edge of the notch is also of an arc shape, and the arc shape of the inner edge of the notch matches the arc shape of the partition.

In an embodiment, a circumferential position of the notch on the infrared lens corresponds to a position of any one of long sides of a focal plane array of an infrared detector of an infrared thermal imaging device.

In an embodiment, the lens barrel includes an inner barrel and an outer barrel nested with each other, an outer wall of the inner barrel is in threaded connection with an inner wall of the outer barrel, and the infrared lens, the laser lens and the laser transceiver are all mounted in the inner barrel.

In an embodiment, the built-in range-finding infrared camera lens further includes a connector provided at a rear end of the outer barrel, where the connector is used to form a pluggable connection with the infrared detector of the infrared thermal imaging device, to fix a circumferential position of the inner barrel relative to the focal plane array of the infrared detector.

In an embodiment, the connector is provided with a wire pass-through hole configured for connecting the laser transceiver with a ranging calculation module in the infrared thermal imaging device through a cable.

In an embodiment, the built-in range-finding infrared camera lens further includes a position-limiting pressing band arranged at the front end of the lens barrel, and the position-limiting pressing band has a cross section having the same shape as the infrared lens, to press a front edge of the infrared lens.

In an embodiment, the built-in range-finding infrared camera lens further includes a sealing light-transmitting plate arranged at a front end of the laser lens, where the sealing light-transmitting plate is configured for sealing the second mounting groove and transmitting the laser light.

In an embodiment, the built-in range-finding infrared camera lens further includes a pressing ring detachably arranged at the front end of the lens barrel, where the pressing ring is configured for pressing a front end face of the position-limiting pressing band and a front end edge of the sealing light-transmitting plate.

In an embodiment, the built-in range-finding infrared camera lens further includes a sealing protective shell sleeved on the outer barrel, where the sealing protective shell is used for sealing the outer barrel and providing protection, and the connector presses a rear end of the sealing protective shell.

An infrared thermal imaging device is further provided according to the present application, including an infrared camera lens for receiving infrared light, an infrared detector for infrared imaging and a ranging calculation module for laser ranging, where the infrared camera lens is the built-in range-finding infrared camera lens according to any one of the above solutions.

The built-in range-finding infrared camera lens provided according to the present application mainly includes a lens barrel, an infrared lens, a laser transceiver and a laser lens. The lens barrel is the main structure of the infrared camera lens, which is mainly used to mount and accommodate other parts. The infrared lens is mounted in the lens barrel, specifically at a front end of the lens barrel, and is mainly used to receive and gather infrared light from outside, and transmit it to the infrared detector of the infrared thermal imaging device for imaging. In addition, a notch is provided on an outer edge of the infrared lens, so that the infrared lens is in an incomplete circular shape, to avoid the laser lens through the notch or leave a mounting space for the laser lens, so as to realize built-in mounting of the laser lens on the lens barrel without changing the shape of the lens barrel or increasing the size of the lens barrel. The laser transceiver mainly includes an emitting portion and a receiving portion, where the emitting portion emits the laser light for ranging and the receiving portion receives the reflected laser light reflected by an object to be measured, and the laser transceiver is fixedly mounted at a rear end of the lens barrel. The laser lens is also arranged at the front end of the lens barrel, which is specifically embedded in the notch of the infrared lens, and faces the laser transceiver at the rear end of the lens barrel 1 in an axial direction. The laser lens is mainly used to converge the laser light emitted by the laser transceiver into parallel light for exit, and converge the reflected laser light reflected by the measured object on the laser transceiver. Moreover, a laser ranging optical axis corresponding to the laser lens is parallel to an infrared optical axis corresponding to the infrared lens. In this way, the laser transceiver only needs to emit the laser light for ranging directly toward the laser lens, and the parallel light converged by the laser lens can exit outward along a direction parallel to the optical axis of the infrared lens, to avoid the exit direction of the laser light for ranging from deviating from the optical axis of the infrared lens, so as to ensure the accuracy of the laser ranging. In addition, after the laser light for ranging exits from the laser lens, a linearity of the laser light can be optimized, and a high parallelism can be maintained between the laser light and the optical axis of the infrared lens.

Compared with the conventional technology, according to the built-in range-finding infrared camera lens provided in the present application, the notch is provided on the outer edge of the infrared lens, to reserve a space for mounting the laser lens in the lens barrel, thus realizing the built-in mounting of the laser lens in the lens barrel. In addition, the infrared lens, the laser lens and the laser transceiver are all fixedly mounted in the lens barrel, that is, the above three parts are connected into a whole through the lens barrel, which makes it easier to ensure that the laser ranging optical axis of the laser lens and the infrared optical axis of the infrared lens are parallel to each other during processing and mounting. Moreover, since the infrared lens, the laser lens and the laser transceiver can be mounted at the lens barrel without the needs of additional adapter components or other mounting procedures, there is no cumulative mounting error due to cooperation of multiple structures, which ensures that the laser ranging optical axis of the laser lens and the infrared optical axis of the infrared lens are highly parallel to each other.

In summary, in the built-in range-finding infrared camera lens according to the present application, the high level of parallelism between the optical axis of the laser light for ranging and the optical axis of the infrared lens can be easily ensured without an extra increase in volume size.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is an exploded view showing the overall structure of a built-in range-finding infrared camera lens according to a specific embodiment of the present application;
FIG. 2 is a schematic view showing the structure of a lens barrel;
FIG. 3 is a right side view of FIG. 2;
FIG. 4 is a schematic view of the lens barrel in which an infrared lens and a laser lens are mounted;
FIG. 5 is a longitudinal sectional view of FIG. 4; and
FIG. 6 is a schematic view showing a positional correspondence between a notch on the infrared lens and a focal plane array of an infrared detector.

**Reference numerals:**

| | | | |
|---|---|---|---|
| 1 | lens barrel, | 2 | partition, |
| 3 | infrared lens, | 4 | laser transceiver, |
| 5 | laser lens, | 6 | connector, |
| 7 | position-limiting pressing band, | 8 | pressing ring, |
| 9 | sealing light-transmitting plate, | 10 | sealing protective shell, |
| 11 | inner barrel, | 12 | outer barrel, |
| 21 | first mounting groove, | 22 | second mounting groove, |
| 23 | laser through hole, | 31 | notch, |
| 51 | exit lens, | 52 | incident lens, |
| 53 | trimmed edge, | 61 | wire pass-through hole. |

### DETAILED DESCRIPTION OF THE EMBODIMENTS

Technical solutions according to the embodiments of the present application will be described clearly and completely as follows in conjunction with the accompany drawings in the embodiments of the present application, so that purposes, characteristics and advantages of the present application can be more obvious and understandable. It is obvious that the described embodiments are only a part of the embodiments according to the present application, rather than all of the embodiments. All the other embodiments obtained by those skilled in the art based on the embodiments in the present application without any creative work belong to the scope of protection of the present application.

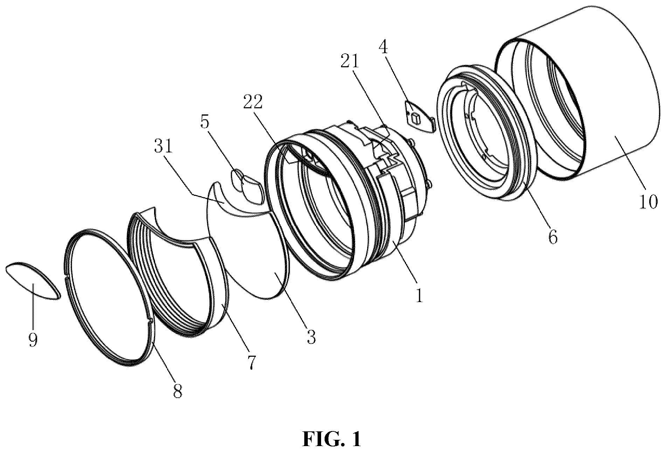

Reference is made to FIG. 1, which is an exploded view showing the overall structure of a built-in range-finding infrared camera lens according to a specific embodiment of the present application.

In the specific embodiment of the present application, a built-in range-finding infrared camera lens mainly includes a lens barrel 1, an infrared lens 3, a laser transceiver 4 and a laser lens 5.

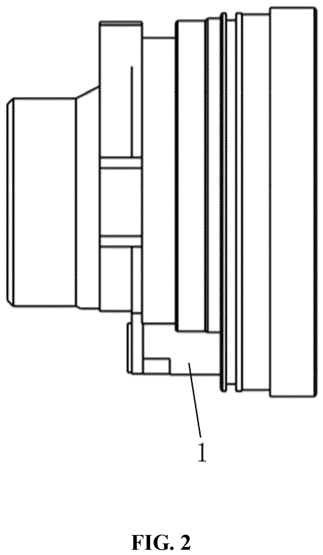

Reference is also made to FIG. 2, which is a schematic view showing the detail structure of the lens barrel 1.

The lens barrel 1 is a main structure of the infrared lens, which is mainly used for mounting and accommodating other parts.

The infrared lens 3 is mounted inside the lens barrel 1, specifically at a front end of the lens barrel 1, and is mainly used for receiving and gathering infrared light from outside and transmitting them to an infrared detector of an infrared thermal imaging device for imaging. Further, an outer edge of the infrared lens 3 is provided with a notch 31, so that the infrared lens 3 is in an incomplete circular shape, to avoid the laser lens 5 through the notch 31 or leave a mounting space for the laser lens 5, so as to realize built-in mounting of the laser lens 5 on the lens barrel 1 without changing the shape of the lens barrel 1 or increasing the size of the lens barrel 1.

The laser transceiver 4 mainly includes an emitting portion and a receiving portion, where the emitting portion emits laser light for ranging and the receiving portion receives reflected laser light reflected by an object to be measured, and the laser transceiver 4 is fixedly mounted at a rear end of the lens barrel 1.

The laser lens 5 is also arranged at the front end of the lens barrel 1, which is specifically embedded in the notch 31 of the infrared lens 3, and faces the laser transceiver 4 at the rear end of the lens barrel 1 in an axial direction. The laser lens 5 is mainly used to converge the laser light for ranging emitted by the laser transceiver 4 into parallel light for exit, and converge the reflected laser light reflected by the measured object on the laser transceiver 4. Moreover, a laser ranging optical axis corresponding to the laser lens 5 and an infrared optical axis corresponding to the infrared lens 3 are kept parallel to each other. In this application, the front end of the lens barrel 1 refers to one end of the lens barrel 1 away from the user during operation, while the rear end of the lens barrel 1 refers to the other end of the lens barrel 1 close to the user during operation.

In this way, the laser transceiver 4 only needs to emit the laser light for ranging directly towards the laser lens 5, and the parallel light obtained by the ranging laser light being converged by the laser lens 5 exits outward along a direction parallel to the optical axis of the infrared lens 3, so as to avoid an exit direction of the laser light for ranging from deviating from the optical axis of the infrared lens 3, to ensure an accuracy of the laser ranging. In addition, linearity of the laser light can be optimized after the laser light for ranging exits from the laser lens 5, to make the optical axis of the laser lens 5 be highly parallel to the optical axis of the infrared lens 3.

Compared with the conventional technology, in the built-in range-finding infrared camera lens according to the embodiment of the present application, with the notch 31 being provided on the outer edge of the infrared lens 3, a space for mounting the laser lens 5 is reserved in the lens barrel 1, and thus the laser lens 5 can be mounted in the lens barrel 1 in the built-in manner. In addition, the infrared lens 3, the laser lens 5 and the laser transceiver 4 are all fixedly mounted inside the lens barrel 1, which is equivalent to the three being connected as one through the lens barrel 1, so that it can be easily guaranteed that the laser ranging optical axis of the laser lens 5 and the infrared optical axis of the infrared lens 3 are parallel to each other during processing and mounting. Moreover, since the infrared lens 3, the laser lens 5 and the laser transceiver 4 can be mounted at the lens barrel 1 without the needs of additional adapter components or other mounting procedures, there is no cumulative mounting error due to cooperation of multiple structures, which ensures that the laser ranging optical axis of the laser lens 5 and the infrared optical axis of the infrared lens 3 are highly parallel to each other.

In summary, the built-in range-finding infrared camera lens according to the embodiment can easily ensure high level of parallelism between the optical axis of the laser light for ranging and the optical axis of the infrared lens without extra increase in volume size.

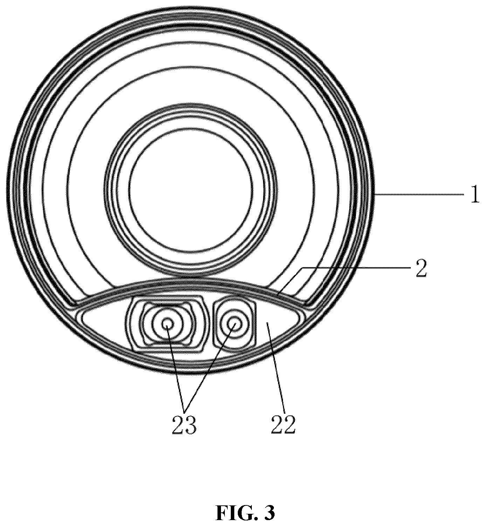

Reference is made to FIG. 3, which is a right side view of FIG. 2.

Considering that the laser lens 5 is embedded in the notch 31 of the infrared lens 3, in order to enable the infrared lens 3 and the laser lens 5 to be stably mounted at the front end of the lens barrel 1, and avoid an interference between the infrared light and the laser light, a partition 2 provided inside the lens barrel 1 is provided in this embodiment, to separate the infrared lens 3 and the laser lens 5 from each other. The partition 2 may be provided on an inner wall of the lens barrel 1. Specifically, both sides of the partition 2 are connected with the inner wall of the lens barrel 1, so that the partition 2 and the lens barrel 1 are fixed with respect to each other, which avoids the cumulative error caused by the subsequent mounting procedures. Preferably, the partition 2 is integrally formed with the inner wall of the lens barrel 1. Alternatively, the partition 2 and the inner wall of the lens barrel 1 may be separately provided and connected together. In this way, the partition 2 divides an internal space of the lens barrel 1 into two portions separated from each other, where one of the two portions (with a relatively smaller area) has a shape corresponding to a shape of the notch 31 on the infrared lens 3, which is mainly used for mounting the laser lens 5, while the other of the two portions (with a relatively larger area) has a shape corresponding to a shape of the infrared lens 3, which is used for mounting the infrared lens 3. Specifically, the above two portions are formed by dividing the internal space of the lens barrel 1 in a radial direction.

In a specific embodiment, for stably mounting the laser transceiver 4 and the laser lens 5 in the lens barrel 1, the partition 2 is provided with a first mounting groove 21 and a second mounting groove 22. The first mounting groove 21 is specifically arranged at a rear end of the partition 2 and is mainly used for mounting the laser transceiver 4. The second mounting groove 22 is specifically arranged at a front end of the partition 2 and is mainly used for mounting the laser lens 5.

In this case, since the optical axis of the infrared lens 3 is parallel to the axial direction of the lens barrel 1, in order to ensure the high parallelism between the optical axis of the laser light for ranging and the optical axis of the infrared lens, mounting surfaces are provided in the first mounting groove 21 and the second mounting groove 22, so as to mount the laser transceiver 4 and the laser lens 5 on the mounting surfaces respectively, to keep the mounting surfaces parallel to a cross section of the lens barrel 1. Generally, the mounting surfaces may be groove bottom surfaces of the first mounting groove 21 and the second mounting groove 22 respectively, so that the laser transceiver 4 and the laser lens 5 are fitted to the groove bottom surfaces of the first mounting groove 21 and the second mounting groove 22, respectively. In this way, when mounting the laser transceiver 4, it is only needed to mount the laser transceiver 4 on the mounting surface of the first mounting groove 21 and keep an emitting portion of the laser transceiver 4 be positioned to face forward and perpendicular to the cross section of the lens barrel 1. Herein, "forward" means being directed to the front direction (the direction away from the user during operation). Similarly, when mounting the laser lens 5, it is only needed to mount the laser lens 5 on the mounting surface of the second mounting groove 22. Since the mounting surfaces of the first mounting groove 21 and the second mounting groove 22 are both parallel to the cross section of the lens barrel 1, the optical axis of the laser light for ranging emitted from the emitting portion of the laser transceiver 4 and the optical axis of the parallel light obtained through convergence by the laser lens 5 are perpendicular to the corresponding mounting surfaces respectively, and thus parallel to the axial direction of the lens barrel 1, that is, parallel to the optical axis of the infrared lens 3.

Generally, the groove shape of the first mounting groove 21 is pre-designed according to the shape of the laser transceiver 4, and the groove shape of the second mounting groove 22 is pre-designed according to the shape of the laser lens 5, to ensure the positioning accuracy of the laser transceiver 4 and the laser lens 5.

Furthermore, considering that the laser transceiver 4 is mounted in the first mounting groove 21 and the laser lens 5 is mounted in the second mounting groove 22, in this embodiment, a laser through hole 23 for the laser light to pass through is provided for communication between the first mounting groove 21 and the second mounting groove 22, to ensure that the laser light for ranging emitted by the emitting portion of the laser transceiver 4 can be smoothly irradiated onto the laser lens 5 and the reflected laser light converged through the laser lens 5 can be smoothly irradiated onto a receiving portion of the laser transceiver 4. Specifically, both ends of the laser through hole 23 are in communication with the mounting surfaces of the first mounting groove 21 and the second mounting groove 22 respectively, so that the laser light for ranging can enter the second mounting groove 22 from the first mounting groove 21 and the reflected laser light can enter the first mounting groove 21 from the second mounting groove 22 through the laser through hole 23.

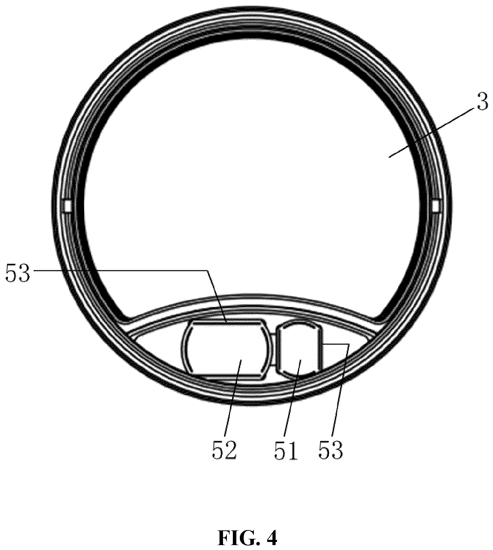

Reference is made to FIG. 4, which is a schematic view of the lens barrel 1 in which the infrared lens 3 and the laser lens 5 are mounted.

In a specific embodiment, the laser lens 5 has a split structure and mainly includes an exit lens 51 and an incident lens 52. The exit lens 51 is mainly used to converge the laser light for ranging emitted by the laser transceiver 4, and the incident lens 52 is mainly used to converge the reflected laser light reflected by the object. Accordingly, in order for mounting the exit lens 51 and the incident lens 52 in the second mounting groove 22 in an embedded manner, in this embodiment, two countersunk grooves are further formed on the groove bottom surface of the second mounting groove 22 for mounting the exit lens 51 and the incident lens 52 respectively, and two laser through holes 23 are also provided for the laser light for ranging and the reflected laser light to pass through, respectively, where one of the two laser through holes 23 is in communication with a groove bottom surface of one of the countersunk grooves, and the other of the two laser through holes 23 is in communication with a groove bottom surface of the other of the countersunk grooves.

Further, considering that the partition 2 occupies the mounting area originally for the infrared lens 3, and the notch 31 provided on the infrared lens 3 will inevitably cause a certain light efficiency loss to the received infrared light, therefore, the smaller the area of the notch 31 is, the better. In view of this, in this embodiment, the exit lens 51 and the incident lens 52 are proximate to each other, and the outer edges of the exit lens 51 and the incident lens 52 are abut against each other, so that there is basically no extra gap between the exit lens 51 and the incident lens 52. The occupation of the internal space of the second mounting groove 22 can be minimized with this arrangement, which reduces the size of the second mounting groove 22, and thereby reducing the occupation in the mounting space with a smaller area, which is formed by division through the partition 2, and correspondingly, the occupation in a volume of the mounting space with the above smaller area by the partition 2 is also reduced, and thus more area is reserved for the infrared lens 3.

In order to further reduce the space occupation of the exit lens 51 and the incident lens 52, in this embodiment, a trimmed edge 53 is provided on an outer edge of the exit lens 51 and/or an outer edge of the incident lens 52, that is, the trimmed edges 53 can be provided only on the exit lens 51, or only on the incident lens 52, or both on the exit lens 51 and the incident lens 52. Specifically, considering that the exit lens 51 and the incident lens 52 are generally of a circular shape, in order to avoid the influence of edge trimming on the emitted laser light and the reflected laser light as much as possible, the trimmed edge 53 is specifically formed by cutting according to specific chords of the exit lens 51 and the incident lens 52, so that only the edge areas of the exit lens 51 and the incident lens 52 are cut off, thereby reducing the area and space occupation.

Moreover, considering that the area of the exit lens 51 and the area of the incident lens 52 are generally different, for example, in a case that a radius of the exit lens 51 is smaller than the radius of the incident lens 52, when both of them are cut to form the corresponding trimmed edges 53, a rectangular shape with an arc-shaped short side will be formed, which is similar to the athletics track shape. In view of this, in this embodiment, the incident lens 52 is arranged on the groove bottom surface of the second mounting groove 22 along any chordal direction, where the chordal direction is a direction along a chord of a cross section of the lens barrel 1. That is, a long side of the incident lens 52 is parallel to the above chordal direction, and is fitted to the inner wall of the lens barrel 1 as much as possible. At the same time, the exit lens 51 is arranged on the groove bottom surface of the second mounting groove 22 along a direction perpendicular to the direction along which the incident lens 52 is arranged, that is, a long side of the exit lens 51 is perpendicular to the chordal direction where the incident lens 52 is located, and is also fitted to the inner wall of the lens barrel 1 as much as possible. In this way, the exit lens 51 and the incident lens 52 are close to each other as much as possible on the groove bottom surface of the second mounting groove 22, and are away from the central axis of the lens barrel 1, thus minimizing the area and space occupation. Correspondingly, the shape of the partition 2 can also be designed according to the fitting of the exit lens 51 and the incident lens 52 in the above arrangement, to make the partition 2 as small as possible as and abut against the outer edges of the exit lens 51 and the incident lens 52 at the same time.

In a specific embodiment, the partition 2 is specifically arc-shaped and arches or bulges toward the axis of the lens barrel 1. Correspondingly, the notch 31 on the infrared lens 3 is also arc-shaped, and the shape of the notch 31 matches the shape of the partition 2, that is, they have the same curvature, and the notch 31 can be spliced with the partition 2 into a whole circle. The applicant has proved through experiments that under the condition that the space occupation of the exit lens 51 and the incident lens 52 is minimized and the shape fitting of the partition 2 is minimized, after the infrared lens 3 is cut to form the notch 31 with the smallest area, the loss of light efficiency is less than 10%, which has little influence on the imaging effect of the infrared detector and basically does not affect the imaging quality. Moreover, the shape of the partition 2 is not limited to the arc shape, for example, the flat plate type can also be used, but it occupies a little more area than the arc shape.

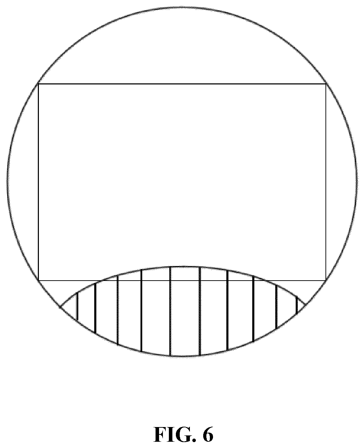

Reference is made to FIG. 6, which is a schematic view showing a positional correspondence between the notch 31 on the infrared lens 3 and a focal plane array of an infrared detector.

In addition, in order to eliminate the adverse effect of the notch 31 on the infrared lens 3 on the imaging effect of the infrared detector as much as possible, in this embodiment, the circumferential position of the notch 31 on the infrared lens 3 positionally corresponds to any long side of the focal plane array of the infrared detector. Considering that the focal plane array of the infrared detector is generally of a rectangular shape, and the infrared light converged by the infrared lens 3 will converge into a small round surface, the plane geometric relationship between the two is equivalent to a rectangle and its circumscribed circle after the small round surface is irradiated on the focal plane array. It is obvious that an area of a bow shape between the long side of the rectangle and the circumscribed circle is the largest, that is, an irradiated area that can be omitted is the largest at the long side of the focal plane array. Therefore, the circumferential position of the notch 31 on the infrared lens 3 is just located in at the long side of the focal plane array, so as to ensure that the infrared rays (shaded portion in the figure) which are reduced due to the notch 31 basically fall at the long side of the focal plane array of the infrared detector, which further ensures that the infrared light reduced due to the notch 31 basically do not affect the normal irradiation receiving of the focal plane array of the infrared detector.

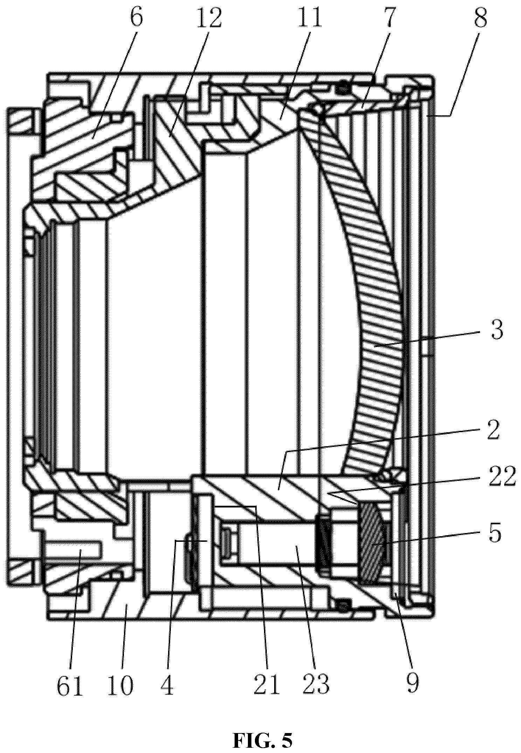

Reference is made to FIG. 5, which is a longitudinal sectional view of FIG. 4.

In a specific embodiment, the lens barrel 1 mainly includes an inner barrel 11 and an outer barrel 12. The inner barrel 11 and the outer barrel 12 are nested with each other, and an outer wall of the inner barrel 11 and an inner wall of the outer barrel 12 are in threaded connection with each other. Correspondingly, components such as the partition 2, the infrared lens 3 and the like are mounted in the inner barrel 11. In this way, when the user rotates the outer barrel 12 (the inner barrel 11 does not move), the axial movement of the outer barrel 12 relative to the inner barrel 11 is realized through the spiral movement of the outer barrel 12 relative to the inner barrel 11, and then the axial length of the whole lens barrel 1 is adjusted until the focus of the infrared lens 3 falls on the focal plane array of the infrared detector, thus realizing the focusing operation.

In addition, in order to facilitate the fixed connection between the infrared lens and the infrared detector, a connector 6 is further provided in this embodiment. Specifically, the connector 6 is arranged at a rear end of the outer barrel 12, the connector 6 is generally ringshaped, and is mainly used to form a pluggable connection, such as plug-in fit, snap-in fit and the like, with the shell of the infrared detector, which is convenient to perform assembly and disassembly. Moreover, there is a fixed positional relationship between the connector 6 and the shell of the infrared detector, that is, only when the connector 6 is at a specific circumferential position can it be inserted into the shell of the infrared detector to form the connection, and at this position, the circumferential position of the inner barrel 11 relative to the focal plane array of the infrared detector is also fixed, that is, the position of the notch 31 of the infrared lens 3 mounted in the inner barrel 11 corresponds to the position of the long side of the focal plane array, thus ensuring that the infrared detector can achieve the best imaging effect after the lens barrel 1 is connected with the infrared detector.

Further, in this embodiment, a wire pass-through hole 61 is provided in the connector 6, and the wire pass-through hole 61 is used for signal cables, electric cables and the like to pass through, so that the laser transceiver 4 can connect the received laser signal with the ranging calculation module in the infrared thermal imaging device by a data cable such as a flat cable passing through the wire pass-through hole 61, thus enabling the ranging calculation module to measure the distance.

In order to achieve the sealing, dustproof and waterproof effect of the laser ranging portion, in this embodiment, a sealing light-transmitting plate 9, such as black flat glass or acrylic transparent plate, is further arranged in the second mounting groove 22, which can highly transmit the laser with a specific wavelength, such as the laser with 905 nm wavelength and the like. Moreover, the sealing light-transmitting plate 9 covers the front end of the laser lens 5 to seal the second mounting groove 22, so as to shield the internal components such as the laser lens 5 and the like, and thereby achieving the dustproof and waterproof effect.

Similarly, considering that the lens barrel 1 is a split structure including the inner barrel 11 and the outer barrel 12, in order to achieve the sealing, dustproof and waterproof effect on the entire lens barrel 1, in this embodiment, a layer of sealing protective shell 10 on the outer barrel 12 is further provided to cover the entire outer barrel 12, so as to achieve the sealing effect and protective effect on the outer barrel 12. Moreover, a front end surface of the connector 6 presses against a rear end face of the sealing protective shell 10, to improve connection stability between the sealing protective shell 10 and the outer barrel 12.

In addition, in order to improve the mounting stability of the infrared lens 3 in the lens barrel 1, a position-limiting pressing band 7 is also mounted in the lens barrel 1 in this embodiment. Specifically, the position-limiting pressing band 7 is mounted at the front end of the lens barrel 1 and is located in front of the infrared lens 3, and a cross-sectional shape of the position-limiting pressing band 7 is the same as that of the infrared lens 3, which is mainly used to press a front end edge area of the infrared lens 3, press and fix the infrared lens 3 in the lens barrel 1, and prevent the infrared lens 3 from loosening or accidentally falling off.

Similarly, in order to improve the mounting stability of the position-limiting pressing band 7 in the lens barrel 1 and the mounting stability of the sealing light-transmitting plate 9 in the second mounting groove 22, a pressing ring 8 is also mounted in the lens barrel 1 in this embodiment. Specifically, the pressing ring 8 is mounted at the front end of the lens barrel 1 and is located in front of the position-limiting pressing band 7, and is mainly used for pressing a front end face of the position-limiting pressing band 7 and a front end edge area of the sealing light-transmitting plate 9, thereby improving the mounting stability of the two. Moreover, in order to facilitate disassembly, the pressing ring 8 and the lens barrel 1 are in detachable connection, such as threaded connection or snap-in connection, and the position-limiting pressing band 7 can also be detachably connected with the lens barrel 1.

An infrared thermal imaging device is further provided according to the present application, which mainly includes an infrared lens for receiving infrared light, an infrared detector for infrared imaging and a ranging calculation module for laser ranging. Since the infrared lens employs all the technical solution of the built-in range-finding infrared camera lens according to the embodiment, the infrared thermal imaging device according to the present application also has all the above technical effects, which will not be repeated here.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A built-in range-finding infrared camera lens, comprising a lens barrel (1), an infrared lens (3), a laser transceiver (4) and a laser lens (5), wherein
an outer edge of the infrared lens (3) is provided with a notch (31);
the infrared lens (3) and the laser lens (5) are both fixedly mounted at a front end of the lens barrel (1), and the laser lens (5) is embedded in the notch (31);
the laser transceiver (4) is fixedly mounted at a rear end of the lens barrel (1); and
a laser ranging optical axis of the laser lens (5) is parallel to an infrared optical axis of the infrared lens (3).

2. The built-in range-finding infrared camera lens according to claim 1, further comprising a partition (2) arranged in the lens barrel (1), wherein the partition (2) is configured to divide an internal space of the lens barrel (1) into two portions separated from each other, one of the two portions has a shape matching a shape of the notch (31) and is configured for mounting the laser lens (5), and the other of the two portions has a shape matching a shape of the infrared lens (3) and is configured for mounting the infrared lens (3).

3. The built-in range-finding infrared camera lens according to claim 2, wherein a rear end of the partition (2) is provided with a first mounting groove (21) for mounting the laser transceiver (4), and a front end of the partition (2) is provided with a second mounting groove (22) for mounting the laser lens (5); and wherein
mounting surfaces of the first mounting groove (21) and the second mounting groove (22) are both parallel to a cross section of the lens barrel (1); and
a laser through hole (23) for laser light to pass through is provided between the first mounting groove (21) and the second mounting groove (22) for communication.

4. The built-in range-finding infrared camera lens according to claim 3, wherein the laser lens (5) comprises an exit lens (51) configured for transmitting exited laser light and an incident lens (52) configured for transmitting incident laser light respectively, and an outer edge of the exit lens (51) and an outer edge of the incident lens (52) abut against each other; the number of the laser through hole (23) is two, and the two laser through holes (23) are configured for the exited laser light and the incident laser light to pass through, respectively.

5. The built-in range-finding infrared camera lens according to claim 4, wherein at least one of the outer edge of the exit lens (51) and the outer edge of the incident lens (52) has a trimmed edge (53) for reducing an area, and both the outer edge of the exit lens (51) and the outer edge of the incident lens (52) abut against the partition (2) and the inner wall of the lens barrel (1) at the same time.

6. The built-in range-finding infrared camera lens according to claim 5, wherein the partition (2) is of an arc shape arching towards a central axis of the lens barrel (1), an inner edge of the notch (31) is also of an arc shape, and the arc shape of the inner edge of the notch (31) matches the arc shape of the partition (2).

7. The built-in range-finding infrared camera lens according to claim 6, wherein a circumferential position of the notch (31) on the infrared lens (3) corresponds to a position of any one of long sides of a focal plane array of an infrared detector of an infrared thermal imaging device.

8. The built-in range-finding infrared camera lens according to claim 1, wherein the lens barrel (1) comprises an inner barrel (11) and an outer barrel (12) nested with each other, an outer wall of the inner barrel (11) is in threaded connection with an inner wall of the outer barrel (12), and the infrared lens (3), the laser lens (5) and the laser transceiver (4) are all mounted in the inner barrel (11).

9. The built-in range-finding infrared camera lens according to claim 8, further comprising a connector (6) provided at a rear end of the outer barrel (12), wherein the connector (6) is used to form a pluggable connection with an infrared detector of an infrared thermal imaging device, to fix a circumferential position of the inner barrel (11) relative to a focal plane array of the infrared detector.

10. The built-in range-finding infrared camera lens according to claim 9, wherein the connector (6) is provided with a wire pass-through hole (61) configured for connecting the laser transceiver (4) with a ranging calculation module in the infrared thermal imaging device through a cable.

11. The built-in range-finding infrared camera lens according to claim 3, further comprising a position-limiting pressing band (7) arranged at the front end of the lens barrel (1), and the position-limiting pressing band (7) has a cross section having the same shape as the infrared lens (3), to press a front edge of the infrared lens (3).

12. The built-in range-finding infrared camera lens according to claim 11, further comprising a sealing light-transmitting plate (9) arranged at a front end of the laser lens (5), wherein the sealing light-transmitting plate (9) is configured for sealing the second mounting groove (22) and transmitting the laser light.

13. The built-in range-finding infrared camera lens according to claim 12, further comprising a pressing ring (8) detachably arranged at the front end of the lens barrel (1), wherein the pressing ring (8) is configured for pressing a front end face of the position-limiting pressing band (7) and a front end edge of the sealing light-transmitting plate (9).

14. The built-in range-finding infrared camera lens according to claim 9, further comprising a sealing protective shell (10) sleeved on the outer barrel (12), wherein the sealing protective shell (10) is configured for sealing the outer barrel (12) and providing protection, and the connector (6) is configured to press a rear end of the sealing protective shell (10).

15. An infrared thermal imaging device, comprising an infrared camera lens for receiving infrared light, an infrared detector for infrared imaging and a ranging calculation module for laser ranging, wherein the infrared camera lens is the built-in range-finding infrared camera lens according to any one of claims 1 to 14.
